# EUROPEAN PATENT SPECIFICATION

(11) **EP 3 725 584 B1**
(45) Date of publication and mention of the grant of the patent: **12.10.2022**
(21) Application number: 18889333.3
(22) Date of filing: 28.11.2018
(51) Int. Cl.: B60L 53/31, F21V 33/00, F21Y 115/10, F21S 8/08, H01R 13/717

(54) **CHARGING POST**
LADESÄULE
BORNE DE CHARGE

(30) Priority: 15.12.2017 CN 201721767741 U
(43) Date of publication of application: 21.10.2020
(73) Proprietor: NIO (Anhui) Holding Co., Ltd., Hefei City, Anhui Province (CN)
(72) Inventor: SUN, Chuangcheng, Shanghai 201804 (CN); XIA, Lijian, Shanghai 201804 (CN); HAO, Tianlei, Shanghai 201804 (CN); MA, Jun, Shanghai 201804 (CN)
(74) Representative: Patentwerk B.V.
(86) International application number: PCT/CN2018/117843
(87) International publication number: WO 2019/114545

(56) References cited:
- CN-A- 102 748 676
- CN-A- 106 864 299
- CN-A- 108 695 656
- CN-U- 202 813 044
- CN-U- 204 045 874
- CN-U- 205 853 904
- CN-U- 205 853 904
- CN-U- 205 970 895
- CN-U- 205 986 197
- CN-U- 206 374 583
- CN-U- 207 809 085
- JP-A- 2012 130 189

## Description

### Technical Field

The invention belongs to the field of battery charging and swapping equipment, and particularly provides a charging pile.

### Background Art

An indicator lamp is generally provided on a charging pile and emits light when the charging pile charges an electric vehicle. When the indicator lamp emits light, a user can know that the charging pile is charging the electric vehicle. In addition, when the light emitted from the indicator lamp illuminates an outer shell of the charging pile, the charging pile is also decorated.

The indicator lamp of the existing charging pile is generally provided inside the shell of the charging pile, and the light emitted from the indicator lamp can be illuminated onto the other shell of the charging pile directly or by means of reflection, so as to illuminate the outer shell of the charging pile. However, due to the limitation of the internal structure of the charging pile, a charging gun socket at a lower portion of the charging pile cannot be illuminated by the light emitted from the indicator lamp, and the front side of the charging pile has a poor luminous effect.

China patent application CN205986197U disclosed a charging pile, and specifically discloses a charging pile comprising a charging pile body 10 and a light conductor 430 arranged in the charging pile body 10. However, the light guide 430 surrounding the outer periphery of the charge gun socket 210 has a semicircular plane structure, not an uneven structure comprising raised structures and recessed structures; and when the light emitted from the LED lamp 420 is conducted to the light guide plate 430, one side of the exposed light guide plate 430 can conduct light directly into the external environment, not one side of the shell.

Accordingly, there is a need for a novel charging pile to solve the above problems in the art.

### Summary of the Invention

To solve the above problems in the prior art, namely, the problems that a charging gun socket at a lower portion of an existing charging pile cannot be illuminated by an indicator light of the charging pile and a front side of the charging pile has a poor luminous effect, the invention is as defined in claim 1. Further embodiments are disclosed in the dependent claims.

In a preferred technical solution of the charging pile described above, the side, close to the light-emitting member, of the curved member is provided with an uneven structure comprising raised structures and recessed structures spaced apart from each other, the curved member reflects the light emitted from the light-emitting member by means of the raised structures, and the recessed structures absorb the light emitted from the light-emitting member.

In a preferred technical solution of the charging pile described above, the shell comprises a front shell and a rear shell that are connected in a matching manner, the curved member is arranged on or integrally formed with the rear shell, the light-emitting member is arranged between the front shell and the curved member, and the curved member is capable of reflecting a part of the light emitted from the light-emitting member onto the front shell.

In a preferred technical solution of the charging pile described above, the front shell comprises a light-transmissive front panel and a light-transmissive side panel, part of the light emitted from the light-emitting member is directly illuminated to the side panel and transmitted out of the side panel, and a further part of the light emitted from the light-emitting member is reflected to the front panel by means of the raised structures or absorbed by the recessed structures.

In a preferred technical solution of the charging pile described above, the front panel has the same shape as the curved member.

In a preferred technical solution of the charging pile described above, an upper portion of the front panel is provided with a light-shielding front cover.

In a preferred technical solution of the charging pile described above, a charging gun socket is connected to a lower portion of the front panel.

In a preferred technical solution of the charging pile described above, the light-emitting member is connected to the front shell or the rear shell.

In a preferred technical solution of the charging pile described above, the light-emitting member is provided with a plurality of light sources.

It will be understood by those skilled in the art that in the preferred technical solution of the invention, by providing the curved member inside the shell of the charging pile, the light emitted from the light-emitting member can be reflected to the front side of the shell by means of the curved member, and in turn illuminates the front side of the shell.

Specifically, the shell comprises the front shell and the rear shell, and the front shell is provided with the charging gun socket. The curved member is integrally formed on the rear shell and is provided with the uneven structure. The light-emitting member is disposed between the front shell and the curved member, a part of light emitted from the light-emitting member is directly illuminated onto the side panel of the front shell, and a further part of the light is illuminated onto the curved member. The curved member reflects the light onto the front panel of the front shell by means of the uneven structure, and thus the front shell and the charging gun socket located on the front shell are illuminated.

It will be appreciated by those skilled in the art that due to the effect of the uneven structure, the illuminated front shell exhibits alternately bright and dark stripes that make the charging pile look more attractive.

### Brief Description of the Drawings

Preferred embodiments of the invention are described below with reference to the accompanying drawings, in which:
Fig. 1 is a side view of a charging pile of the invention;
Fig. 2 is a schematic exploded structural view of the charging pile of the invention;
Fig. 3 is a schematic view of an internal structure of the charging pile of the invention;
Fig. 4 is a side view of a curved member of the invention;
Fig. 5 is an enlarged view of a portion A in Fig. 4; and
Fig. 6 is a light ray view of light emitted from a light-emitting member of the invention.

### List of reference numerals:

1. Front shell; 11. Front panel; 12. Side panel; 2. Rear shell; 3. Light-emitting member; 4. Curved member; 41. Uneven structure; 411. Recessed structure; 412. Raised structure; 5. Charging gun socket; 6. Front cover.

### Detailed Description of Embodiments

It should be understood by those skilled in the art that embodiments in this section are merely used to explain the technical principle of the invention and are not intended to limit the scope of protection of the invention. For example, although various components in the drawings are drawn in a certain proportional relationship, such a proportional relationship is not fixed, those skilled in the art can make amendments according to requirements so as to adapt to specific application scenarios, and the amended technical solutions will still fall within the scope of protection of the invention.

It should be noted that the terms herein that indicate the direction or positional relationship, such as "centre", "upper", "lower", "left", "right", "vertical", "horizontal", "inner" and "outer", are based on the direction or positional relationship shown in the figures, which is merely for ease of description and not to indicate or imply that the device or element must have a particular orientation and be constructed and operated in a particular orientation, and therefore, should not be construed as limiting the invention.

In addition, it should also be noted that in the description of the invention, the terms "mount", "engage" and "connect" should be interpreted in a broad sense unless explicitly defined and limited otherwise, which, for example, may also mean a fixed connection, a detachable connection or an integral connection; my mean a direct connection, an indirect connection by means of an intermediary, or internal communication between two elements. For those skilled in the art, the specific meaning of the above terms in the invention can be interpreted according to the specific situation.

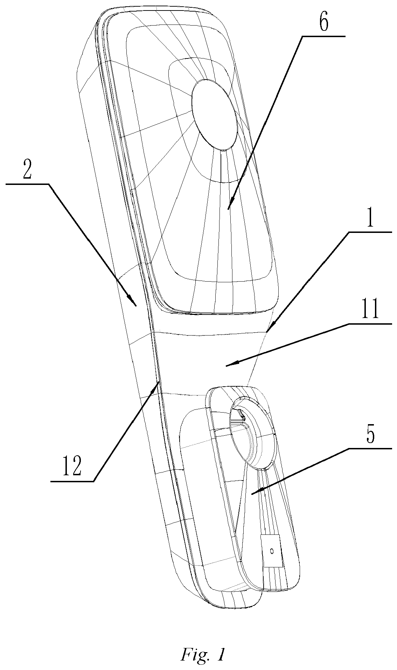

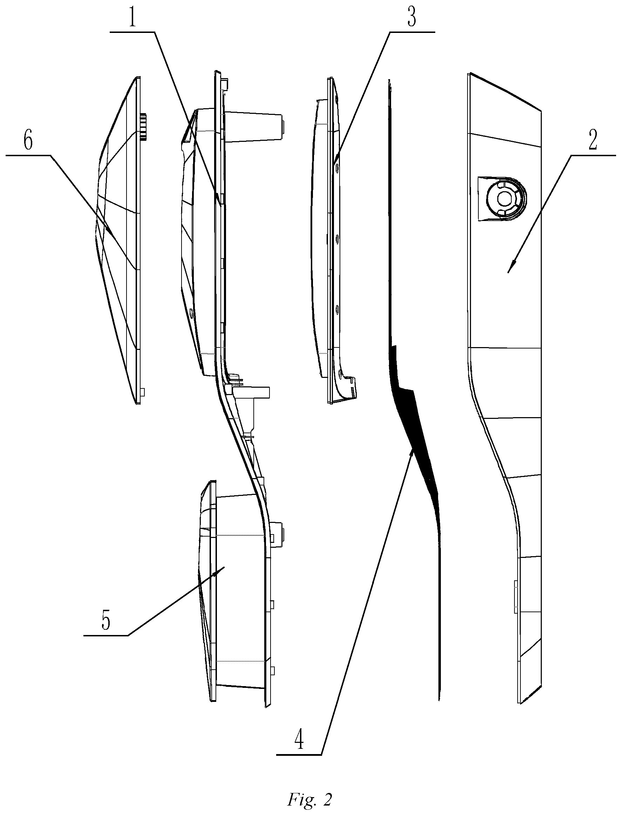

As shown in Figs. 1 and 2, the charging pile of the invention mainly comprises a shell, a light-emitting member 3, and a curved member 4. The shell mainly comprises a light-transmissive front shell 1 and a light-tight rear shell 2, and the front shell 1 and the rear shell 2 are connected together via screws. In addition, those skilled in the art may also connect the front shell 1 and the rear shell 2 together by any other feasible connection means, such as snap connection, riveting, plugging, pin connection and adhesively bonding. The light-emitting member 3 and the curved member 4 are both arranged between the front shell 1 and the rear shell 2, and the light-emitting member 3 is located between the front shell 1 and the curved member 4 such that light emitted from the light-emitting member 3 can be reflected by the curved member 4 onto the front shell 1, thereby illuminating the front shell 1.

As shown in Fig. 1, the front shell 1 comprises a light-transmissive front panel 11 and a light-transmissive side panel 12. The side panel 12 have a narrower width. A part of the light emitted from the light-emitting member 3 is directly illuminated onto the side panel 12 so as to illuminate the side panel 12; and a further part of the light emitted from the light-emitting member 3 is reflected by the curved member 4 onto the front panel 11 so as to illuminate the front panel 11.

As shown in Fig. 2, the curved member 4 has the same shape as the front panel 11, that is, the curved member 4 matches the front panel 11 in an extension direction such that the curved member 4 can reflect the light emitted from the light-emitting member 3 onto the front panel 11.

As shown in Figs. 1 to 3, a charging gun socket 5 is connected to the front panel 11, and the light emitted from the light-emitting member 3 can penetrate through the front panel 11 after being reflected by the curved member 4, so as to illuminate the charging gun socket 5, so that a user can visually observe the charging gun socket 5 when using the charging pile at night. The front panel 11 is further provided with a light-tight front cover 6. In an assembled state, the front cover 6 can shield the light-emitting member 3, thereby optimizing the appearance of the charging pile and making the charging pile look more attractive.

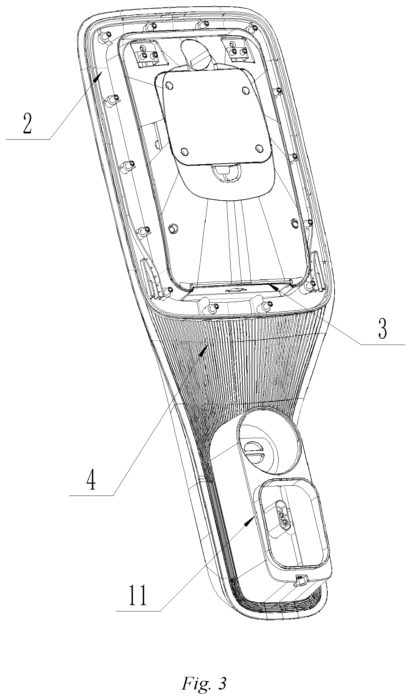

As shown in Figs. 2 and 3, the light-emitting member 3 of the invention may be connected to the front shell 1 or the rear shell 2. The curved member 4 is preferably provided on the rear shell 2, and the curved member 4 is integrally formed with the rear shell 2. Alternatively, the curved member 4 may be provided on the front shell 1 by those skilled in the art as required. In a preferred embodiment of the invention, the periphery of the light-emitting member 3 is provided with a rectangular structure formed by a plurality of light sources, such that the light emitted from the light-emitting member 3 can illuminate any corner around it. It can be understood by those skilled in the art that the light-emitting member 3 may be any component capable of emitting light, for example, an LED light-emitting lamp group, an LED light-emitting lamp strip, an LED light-emitting lamp bar, etc.

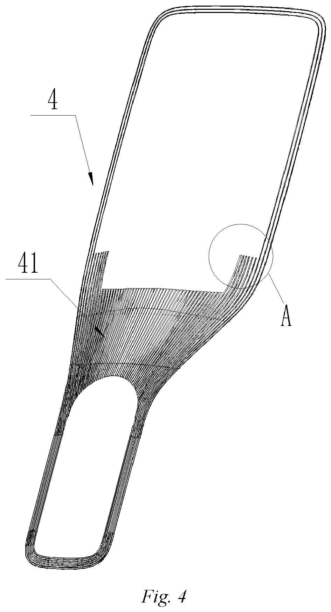

As shown in Fig. 4, the side, close to the front shell 1, of the curved member 4 is provided with an uneven structure 41. The curved member 4 reflects the light emitted from the light-emitting member 3 by means of the uneven structure 41. The uneven structure 41 completely or approximately completely cover this side of the curved member 4. The uneven structure 41 as a whole extends in a length direction of the charging pile, and the extending direction of two ends of the uneven structure 41 is perpendicular to the length direction of the charging pile, such that the uneven structure 41 forms two closed-loop structures as shown in Fig. 4, of which the upper closed-loop structure in Fig. 4 is used to accommodate the light-emitting member 3, and the lower closed-loop structure in Fig. 4 is used to accommodate the charging gun socket 5. It can be seen easily from Fig. 4 that the uneven structure 41 is an alternately recessed and raised stripe structure. Furthermore, in other embodiments of the invention, the uneven structure 41 may also be configured in any other form, such as an alternately recessed and raised corrugated structure, by those skilled in the art as required.

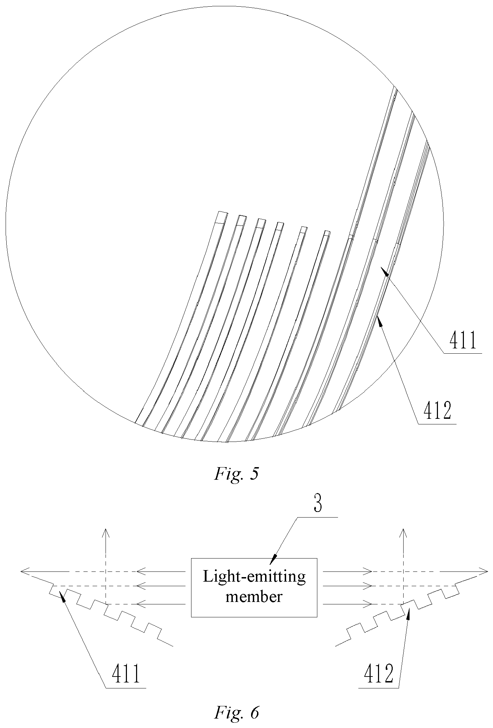

As shown in Figs. 4 and 5, the uneven structure 41 comprises recessed structures 411 and raised structures 412. In a preferred embodiment of the invention, the recessed structures 411 and the raised structures 412 are spaced apart from each other. Surfaces of the raised structures 412 are provided as smooth curved surfaces or flat surfaces capable of reflecting light such that the raised structures 412 can reflect the light emitted from the light-emitting member 3, and the recessed structures 411 are used to absorb the light emitted from the light-emitting member 3. It will be readily understood by those skilled in the art that the light illuminated into the recessed structures 411 by the light-emitting member 3 can be continuously reflected between the raised structures 412 on two sides of the recessed structures 411 (similar to light signal transmission in an optical fibre), thereby causing the light to be propagated in the extending direction of the uneven structure 41 and to be illuminated to the charging gun socket 5. It should be noted that a further part of the light illuminated to the charging gun socket 5 is the light from the light-emitting member 3 that is projected from the front panel 11 directly to the charging gun socket 5.

The light-emitting principle of the charging pile of the invention will be described in detail with reference to Fig. 6.

As shown in Fig. 6, a part of the light emitted from the light-emitting member 3 is directly illuminated onto the side panel 12 of the front shell 1 so as to illuminate the side panel 12. A further part of the light emitted from the light-emitting member 3 is illuminated onto the curved member 41, and then reflected onto the front panel 11 of the front shell 1 by means of the curved member 41 so as to illuminate the front panel 11. Specifically, light rays illuminated onto the recessed structures 411 are absorbed by the recessed structures 411, and light rays illuminated onto the raised structures 412 are reflected onto the front panel 11 by the raised structures 412, such that the light illuminated onto the front panel 11 forms alternately bright and dark stripes. In particular, when the front panel 11 matches the curved member 4 in the extension direction and the spacing therebetween is small, the alternately bright and dark stripes on the front panel 11 are clearer and more obvious, and the appearance of the charging pile is optimized.

It will be apparent from the above description of the charging pile of the invention that by providing the curved member 4 inside the shell of the charging pile and disposing the light-emitting member 3 between the front shell 1 and the curved member 4, the light emitted from the light-emitting member 3 can be illuminated to the front shell 1 and the charging gun socket 5 by means of reflection of the curved member 4. By providing the uneven structure 41 on the side, close to the light-emitting member 3, of the curved member 4, the light reflected onto the front shell 1 exhibits the alternately bright and dark stripes, making the charging pile more attractive.

It should be noted that although not shown in the figures, the charging pile of the invention is fixed to a base via the shell. Exemplarily, a lower end of the shell is provided with a metal supporting seat, one end of the metal supporting seat is fixedly connected to the shell, and the other end of the metal supporting seat is fixedly connected to the ground. Moreover, the front shell 1 and the rear shell 2 may be made of any feasible material such as example, plastic, metal and ceramic. The curved member 4 may also be made of any feasible material such as plastic, metal and ceramic as long as it has a light-reflecting function.

Heretofore, the technical solutions of the invention have been described with reference to the preferred embodiments shown in the accompanying drawings; however, those skilled in the art can readily understand that the scope of protection of the invention is obviously not limited to these particular embodiments. Those skilled in the art can make equivalent changes or substitutions to the related technical features without departing from the principles of the invention, and all the technical solutions after the changes or substitutions will fall within the scope of protection of the invention. The scope of the protection is defined by the claims.

## Claims

1. A charging pile, comprising a shell and a light-emitting member (3) provided inside the shell, the charging pile further comprises a curved member (4) arranged inside the shell, wherein the side, close to the light-emitting member (3), of the curved member (4) is configured to reflect light emitted from the light-emitting member (3) to one side of the shell in an alternately bright and dark manner; the side, close to the light-emitting member (3), of the curved member (4) is provided with an uneven structure (41) comprising raised structures (412) and recessed structures (411) spaced apart from each other, the curved member (4) reflects the light emitted from the light-emitting member (3) by means of the raised structures (412), and the recessed structures (411) absorb the light emitted from the light-emitting member (3);
the shell comprises a front shell (1) and a rear shell (2) that are connected in a matching manner, the curved member (4) is arranged on or integrally formed with the rear shell (2), the light-emitting member (3) is arranged between the front shell (1) and the curved member (4), and the curved member (4) is capable of reflecting a part of the light emitted from the light-emitting member (3) onto the front shell (1);
**characterized in that**
the front shell (1) comprises a light-transmissive front panel (11) and a light-transmissive side panel (12), part of the light emitted from the light-emitting member (3) is directly illuminated to the side panel (12) and transmitted out of the side panel (12), and a further part of the light emitted from the light-emitting member (3) is reflected to the front panel (11) by means of the raised structures (412) or absorbed by the recessed structures (411);
the front panel (11) has the same shape as the curved member (4);
a charging gun socket (5) is connected to a lower portion of the front panel (11).

2. The charging pile according to claim 1, **characterized in that** the light-emitting member (3) is connected to the front shell (1) or the rear shell (2).

3. The charging pile according to claim 1, **characterized in that** the light-emitting member (3) is provided with a plurality of light sources.

## Patentansprüche

1. Ladesäule, die eine Hülle und ein innerhalb der Hülle bereitgestelltes lichtemittierendes Element (3) umfasst, wobei die Ladesäule weiter ein innerhalb der Hülle angeordnetes gekrümmtes Element (4) umfasst, wobei die nahe beim lichtemittierenden Element (3) liegende Seite des gekrümmten Elements (4) so ausgestaltet ist, dass sie vom lichtemittierenden Element (3) emittiertes Licht im Wechsel hell und dunkel zu einer Seite der Hülle hin reflektiert; wobei die nahe beim lichtemittierenden Element (3) liegende Seite des gekrümmten Elements (4) mit einer unebenen Struktur (41), die voneinander beabstandete erhöhte Strukturen (412) und vertiefte Strukturen (411) umfasst, ausgestattet ist, das gekrümmte Element (4) das vom lichtemittierenden Element (3) emittierte Licht mittels der erhöhten Strukturen (412) reflektiert und die vertieften Strukturen (411) das vom lichtemittierenden Element (3) emittierte Licht absorbieren;
wobei die Hülle ein Hüllenvorderteil (1) und ein Hüllenrückteil (2), die aufeinanderpassend verbunden sind, umfasst, das gekrümmte Element (4) auf dem Hüllenrückteil (2) angeordnet oder einstückig mit ihm ausgebildet ist, das lichtemittierende Element (3) zwischen dem Hüllenvorderteil (1) und dem gekrümmten Element (4) angeordnet ist und das gekrümmte Element (4) zum Reflektieren eines Teils des vom lichtemittierenden Element (3) emittierten Lichts auf das Hüllenvorderteil (1) fähig ist;
**dadurch gekennzeichnet, dass**
das Hüllenvorderteil (1) eine lichtdurchlässige Frontplatte (11) und eine lichtdurchlässige Seitenplatte (12) umfasst, ein Teil des vom lichtemittierenden Element (3) emittierten Lichts direkt auf die Seitenplatte (12) gelenkt und aus der Seitenplatte (12) heraus übertragen wird und ein weiterer Teil des vom lichtemittierenden Element (3) emittierten Lichts mittels der erhöhten Strukturen (412) zur Frontplatte (11) hin reflektiert oder von den vertieften Strukturen (411) absorbiert wird;
die Frontplatte (11) die gleiche Form wie das gekrümmte Element (4) hat;
eine Ladepistolenanschlussbuchse (5) mit einem unteren Abschnitt der Frontplatte (11) verbunden ist.

2. Ladesäule nach Anspruch 1, **dadurch gekennzeichnet, dass** das lichtemittierende Element (3) mit dem Hüllenvorderteil (1) oder dem Hüllenrückteil (2) verbunden ist.

3. Ladesäule nach Anspruch 1, **dadurch gekennzeichnet, dass** das lichtemittierende Element (3) mit einer Vielzahl von Lichtquellen ausgestattet ist.

## Revendications

1. Borne de charge, comprenant une coque et un élément électroluminescent (3) situé à l'intérieur de la coque, la borne de charge comprend en outre un élément incurvé (4) agencé à l'intérieur de la coque, dans laquelle le côté de l'élément incurvé (4), près de l'élément électroluminescent (3), est configuré pour réfléchir la lumière émise par l'élément électroluminescent (3) sur un côté de la coque de manière vive et sombre en alternance ; le côté, près de l'élément électroluminescent (3), de l'élément incurvé (4), est pourvu d'une structure irrégulière (41) comprenant des structures saillantes (412) et des structures renfoncées (411) espacées les unes des autres, l'élément incurvé (4) réfléchit la lumière émise par l'élément électroluminescent (3) au moyen des structures saillantes (412), et les structures renfoncées (411) absorbent la lumière émise par l'élément électroluminescent (3) ;
la coque inclut une coque avant (1) et une coque arrière (2) qui sont raccordées de façon appariée, l'élément incurvé (4) est agencé sur ou fait partie intégrante de la coque arrière (2), l'élément électroluminescent (3) est agencé entre la coque avant (1) et l'élément incurvé (4), et l'élément incurvé (4) est apte à réfléchir une partie de la lumière émise par l'élément électroluminescent (3) sur la coque avant (1) ; **caractérisée en ce que**
la coque avant (1) comprend un panneau avant transmetteur de lumière (11) et un panneau latéral transmetteur de lumière (12), une partie de la lumière émise par l'élément électroluminescent (3) est directement projetée sur le panneau latéral (12) et transmise hors du panneau latéral (12), et une autre partie de la lumière émise par l'élément électroluminescent (3) est réfléchie sur le panneau avant (11) au moyen des structures saillantes (412) ou absorbée par les structures renfoncées (411) ;
le panneau avant (11) a la même forme que l'élément incurvé (4) ;
une prise de charge (5) est connectée à la portion inférieure du panneau avant (11).

2. Borne de charge selon la revendication 1, **caractérisée en ce que** l'élément électroluminescent (3) est connecté à la coque avant (1) ou la coque arrière (2).

3. Borne de charge selon la revendication 1, **caractérisée en ce que** l'élément électroluminescent (3) est pourvu d'une pluralité de sources de lumière.
